# EUROPÄISCHE PATENTSCHRIFT

(11) **EP 3 227 147 B1**
(45) Veröffentlichungstag und Bekanntmachung des Hinweises auf die Patenterteilung: **20.11.2019**
(21) Anmeldenummer: 15804108.7
(22) Anmeldetag: 01.12.2015
(51) Int. Cl.: B60R 16/027, B60R 25/02, B60R 25/0215

(54) **VERRIEGELUNGSEINRICHTUNG FÜR EIN KRAFTFAHRZEUG**
LOCKING DEVICE FOR A VEHICLE
DISPOSITIF DE VERROUILLAGE POUR UN VÉHICULE

(30) Priorität: 01.12.2014 DE 102014017639
(43) Veröffentlichungstag der Anmeldung: 11.10.2017
(73) Patentinhaber: Marquardt GmbH, 78604 Rietheim-Weilheim (DE)
(72) Erfinder: KAPLAN, Ali, 88512 Mengen (DE)
(74) Vertreter: Otten, Roth, Dobler & Partner mbB Patentanwälte
(86) Internationale Anmeldenummer: PCT/EP2015/078163
(87) Internationale Veröffentlichungsnummer: WO 2016/087420

(56) Entgegenhaltungen:
- EP-A1- 2 604 481
- DE-A1- 2 741 104
- DE-A1-102008 031 217
- DE-C- 703 539
- FR-A- 1 240 060

## Beschreibung

Die Erfindung betrifft eine Verriegelungseinrichtung nach dem Oberbegriff des Patentanspruchs 1.

Derartige Verriegelungseinrichtungen dienen als Lenkungsverriegelung zum Verriegeln der Lenksäule in einem Kraftfahrzeug, genauer gesagt der Lenkwelle für das Lenkrad, um den Diebstahlschutz zu erhöhen. Sie werden insbesondere bei Betätigung des Zündschlosses im Kraftfahrzeug ver- und/oder entriegelt. Anstelle der Lenkradsäule kann auch ein sonstiges funktionsrelevantes Bauteil des Kraftfahrzeugs, beispielsweise der Getriebeschalthebel o. dgl., verriegelbar sein.

In Kraftfahrzeugen kann anstelle eines mechanischen Zündschlosses ein elektronisches Zündschloss verwendet werden, das mittels eines elektronischen Schlüssels betätigbar ist. Zur näheren Ausgestaltung eines solchen elektronischen Zündschlosses wird auf die DE 44 34 587 A1 verwiesen. Desweiteren können in Kraftfahrzeugen auch Fahrberechtigungssysteme mit einer "KeylessGo"-Funktionalität zum Einsatz kommen, bei denen die Authentifikation des elektronischen Schlüssels durch eine Codeübertragung mittels elektromagnetischer Wellen selbsttätig erfolgt, wenn der Benutzer sich innerhalb des Kraftfahrzeugs befindet und beispielsweise eine Start/Stop-Taste im Armaturenbrett betätigt.

Bei einem elektronischen Zündschloss und/oder einem Fahrberechtigungssystem mit KeylessGo-Funktionalität kann in vorteilhafter Weise die Lenkungsverriegelung durch einen Antrieb, beispielsweise einen Elektromotor, angetrieben werden. Der Elektromotor wird nur dann zur Entriegelung angesteuert, wenn die codierten Daten des elektronischen Schlüssels richtig sind, d.h. wenn der zum Kraftfahrzeug zugehörige Schlüssel erkannt wird. Es handelt sich bei einer derartigen Lenkungsverriegelung um eine sogenannte elektrische und/oder elektronische Lenkungsverriegelung.

Eine solche, aus der DE 10 2008 031 217 A1 bekannte Verriegelungseinrichtung besitzt ein zwischen einer ersten und einer zweiten Position bewegbares Sperrglied zur Verriegelung des funktionsrelevanten Bauteils. Das Sperrglied steht in der ersten Position in blockierenden Eingriff mit dem Bauteil und/oder ist in der ersten Position in blockierenden Eingriff mit dem Bauteil bringbar. In der zweiten Position steht das Sperrglied außer Eingriff mit dem Bauteil. Ein Antrieb dient für die Bewegung des Sperrglieds zwischen den beiden Positionen. Desweiteren weist die Verriegelungseinrichtung ein im und/oder am Sperrbolzen bzw. Sperrglied angeordnetes Sicherungsmittel, und zwar insbesondere in der Art einer Rückdrücksicherung für das in der ersten Position befindliche Sperrglied, zum Sichern des Sperrglieds in der ersten Position auf, um Manipulationen von unbefugten Personen an der Verriegelungseinrichtung zur Beeinträchtigung von deren Sperrfunktion zu verhindern. Allerdings hat es sich herausgestellt, dass dennoch durch starke Gewalteinwirkung auf die Verriegelungseinrichtung das Sperrglied aus der ersten Position herausgedrückt werden kann. In solchen Fällen erfüllt die Verriegelungseinrichtung daher nicht die üblichen Normen, die sogenannten "Thatcham"-Anforderungen, im Hinblick auf den Diebstahlschutz.

Eine weitere Verriegelungseinrichtung mit einem Sicherungsmittel für das Sperrglied ist aus der EP 2 604 481 A1 bekannt.

Der Erfindung liegt die Aufgabe zugrunde, die Verriegelungseinrichtung im Hinblick auf einen erhöhten Diebstahlschutz weiterzuentwickeln. Insbesondere soll eine mechanische Rückdrücksicherung in der Verriegelungseinrichtung geschaffen werden, die einer massiven Rückdrückkraft auf das Sperrglied standhalten kann, um so die Thatcham-Anforderungen für den Diebstahlschutz zu erfüllen.

Diese Aufgabe wird bei einer gattungsgemäßen Verriegelungseinrichtung durch die kennzeichnenden Merkmale des Anspruchs 1 gelöst.

Bei der erfindungsgemäßen Verriegelungseinrichtung handelt es sich bei dem Sicherungsmittel um einen Stift. Das Sicherungsmittel ist beweglich, und zwar insbesondere translatorisch verschiebbar, in einer Aufnahme des Sperrglieds gelagert. Es ist somit festzustellen, dass bei der Erfindung das Sperrglied selbst den Schutz vor dessen Herausdrücken aus der ersten Position bereitstellt. Weitere Ausgestaltungen der Erfindung sind Gegenstand der Unteransprüche.

In einer weiteren Ausgestaltung, die sich durch hohe Funktionssicherheit auszeichnet, kann das Sicherungsmittel relativ zum Sperrglied zwischen einer Sicherungsposition und einer Entsicherungsposition bewegbar sein. Das Sicherungsmittel kann weiterhin derart ausgestaltet sein, um in der Sicherungsposition das in blockierenden Eingriff mit dem Bauteil befindliche Sperrglied gegen eine Bewegung in Richtung der zweiten Position zu sichern, solange das Sperrglied nicht mittels des Antriebs bewegt wird.

In einfacher Art und Weise kann das Sicherungsmittel mit einer elastischen Kraft in Richtung zur Sicherungsposition beaufschlagt sein. Zur Erzeugung der elastischen Kraft kann eine Feder, insbesondere eine Druckfeder, dienen. Vorteilhafterweise arbeitet ein solcherart ausgestaltetes Sicherungsmittel passiv, d.h. dieses benötigt keinen zusätzlichen eigenen Antrieb.

In einfacher sowie kostengünstiger Art und Weise kann der Stift einen im wesentlichen kreisförmigen Querschnitt besitzen. Zweckmäßigerweise kann das Sicherungsmittel aus Metall bestehen. Dann handelt es sich bei dem Stift um einen Metallstift, der eine hohe Stabilität bietet. Die Aufnahme für den Stift kann als eine Bohrung im Sperrglied ausgestaltet sein, so dass der Stift in kompakter Bauweise in der Bohrung im Sperrglied angeordnet ist.

Es kann sich anbieten, dass für die Verriegelungseinrichtung ein Gehäuse vorgesehen ist. Das Gehäuse kann wiederum aus einem Sockel sowie einem Deckel bestehen. Der hohen Widerstandsfähigkeit gegenüber manipulativen Eingriffen halber kann der Sockel aus Metall bestehen. Für das Sicherungsmittel kann in einfacher Art ein Einrastbereich an einem gehäusefesten Teil vorgesehen sein, derart dass das Sicherungsmittel in der Sicherungsposition bei in blockierenden Eingriff mit dem Bauteil befindlichen Sperrglied dessen Bewegung verriegelnd in den Einrastbereich eingreift. Zwecks Erhöhung der Diebstahlsicherheit kann es sich bei dem gehäusefesten Teil um den Sockel handeln, so dass insbesondere der Einrastbereich im Sockel vorgesehen sein kann.

In kompakter Bauweise kann der Antrieb einen Elektromotor sowie ein Übertragungsglied, insbesondere ein Schneckenrad, zur Bewegung des Sperrglieds umfassen. Das Übertragungsglied kann um eine Drehachse mittels des Elektromotors drehbar sein. Desweiteren kann das Sperrglied derart am Übertragungsglied angelenkt sein, dass das Sperrglied durch Drehung des Übertragungsglieds in die jeweilige Drehrichtung translatorisch in Richtung der Drehachse zwischen der ersten sowie der zweiten Position bewegbar ist. Weiterhin kann eine Steuerkurve für die Bewegung des Sicherungsmittels zwischen der Sicherungsposition und der Entsicherungsposition mit dem Antrieb zusammenwirken, derart dass das Sicherungsmittel bei Bewegung des Sperrglieds in die erste Position von der Steuerkurve in die Sicherungsposition überführbar ist sowie bei Bewegung des Sperrglieds in die zweite Position von der Steuerkurve in die Entsicherungsposition überführbar ist. Insbesondere wird somit das Sicherungsmittel bei Bewegung des Sperrglieds in die erste Position von der Steuerkurve zum Eingriff in den Einrastbereich freigegeben. Insbesondere wird somit das Sicherungsmittel bei Bewegung des Sperrglieds in die zweite Position von der Steuerkurve außer Eingriff mit dem Einrastbereich gebracht. Soweit als Übertragungsglied ein Schneckenrad Verwendung findet, kann die Steuerkurve für das Sicherungsmittel in kompakter Art am Schneckenrad befindlich sein. Mit diesen Maßnahmen ist eine Ansteuerung in einfacher und funktionssicherer Weise für das Sicherungsmittel ermöglicht.

In kompakter Ausgestaltung kann die Steuerkurve einen der Sicherungsposition zugeordneten ersten Abschnitt sowie einen der Entsicherungsposition zugeordneten zweiten Abschnitt umfassen. In bevorzugter Weise kann der zweite Abschnitt als eine konzentrisch zur Drehachse angeordnete zweite Kreisbahn für die Führung des Sicherungsmittels ausgestaltet sein. Desweiteren kann der erste Abschnitt als eine von der zweiten Kreisbahn abgehende, in eine konzentrisch zur Drehachse angeordnete, erste Kreisbahn übergehende Kurve für die Führung des Sicherungsmittels ausgestaltet sein. Eine solche Ausgestaltung ist zudem kostengünstig herstellbar.

Die Verriegelungseinrichtung kann in bevorzugter Weise an der Lenkradsäule des Kraftfahrzeugs angeordnet sein. Die Lenkwelle in der Lenkradsäule kann dann wenigstens eine Einrastposition für das Sperrglied zur Blockierung der Drehbewegung der Lenkwelle umfassen. Um den Komfort für den Benutzer zu steigern, können mehrere Einrastpositionen in der Art eines Zahnkranzes an der Lenkwelle vorgesehen sein.

Für eine besonders bevorzugte Ausgestaltung der Erfindung ist nachfolgendes festzustellen.

Bei einer elektrischen Lenkungsverriegelung (ELV) ist eine Rückdrücksicherung umgesetzt, die ein Zurückdrücken der verriegelten Sperre verhindern soll. Der Schieber, der ein Zurückdrücken der Sperre verhindern soll, besteht aus Kunststoff und ist in einem Zahnrad aus Kunststoff gelagert. Diese Lösung kann konzeptbedingt nur einer geringen Rückdrückkraft der Sperre standhalten, bei einer massiven Rückdrückkraft jedoch überwunden werden. Es soll daher weitergehend eine mechanische Rückdrücksicherung in einer ELV realisiert werden, die einer massiven Rückdrückkraft der Sperre standhalten kann, wobei insbesondere die Thatcham-Anforderungen erfüllt werden sollen.

Bei der weitergehenden erfindungsgemäßen Lösung ist anstatt eines Schiebers aus Kunststoff ein gefederter, runder Metallstift vorgesehen, der sich in der Sperre, d.h. im Sperrglied, in einer Bohrung befindet. Bei verriegelter Sperre rastet er in einen Hinterschnitt im Sockel aus Zinkdruckguss ein. Bei Zurückdrücken der Sperre stützt sich der Metallstift im Sockel ab und die einwirkende Rückdrückkraft wird direkt in den Sockel abgeleitet und aufgenommen. Der Sockel kann im Vergleich zum Schieber aus Kunststoff einer massiven Rückdrückkraft der Sperre standhalten.

Der Hinterschnitt im Sockel befindet sich nur im Bereich der Verriegelt-Position der Sperre. Beim Aufsetzen der Sperre auf einen Zahn des Raststerns an der Lenkwelle befindet sich der Metallstift in betätigter Position, d.h. in der Entsicherungsposition, innerhalb der Sperre und kann nicht einrasten. Dreht sich der Raststern und/oder die Lenkwelle bis die Sperre eine Zahnlücke zum Verriegeln findet, schnappt der Metallstift in den Hinterschnitt ein und ein Zurückdrücken der verriegelten Sperre wird verhindert.

Beim Entriegeln wird der Metallstift über eine Steuerkurve im Schneckenrad in die Sperre gedrückt, d.h. von der Sicherungsposition in die Entsicherungsposition gebracht, und somit die Sperre zum Verfahren in die Entriegelt-Position freigegeben.

Geschaffen ist somit eine Rückdrücksicherung bei einer ELV gegen Einwirken einer massiven Rückdrückkraft auf die Sperre, welche die Thatcham-Anforderungen erfüllt.

Die mit der Erfindung erzielten Vorteile bestehen insbesondere darin, dass eine unbefugte Manipulation des Sperrglieds in der Verriegelungseinrichtung verhindert und/oder zumindest erschwert wird. Insbesondere ist ein Zurückdrücken des Sperrglieds in der Verriegelungseinrichtung bei Einwirken einer massiven Rückdrückkraft auf das Sperrglied wirksam verhindert. Vorteilhafterweise ist so der Diebstahlschutz für das Fahrzeug verbessert. Zudem ist die erfindungsgemäße Verriegelungseinrichtung kompakt ausgestaltet und auch kostengünstig herstellbar.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Lenkrad eines Kraftfahrzeugs mit einer Verriegelungseinrichtung in schematischer Darstellung,
- Fig. 2: einen Teil der Verriegelungseinrichtung aus Fig. 1 in Explosionsdarstellung,
- Fig. 3: einen Einrastbereich der Verriegelungseinrichtung als Detailausschnitt aus der Fig. 2,
- Fig. 4: eine Steuerkurve der Verriegelungseinrichtung als Detailausschnitt aus der Fig. 2 und
- Fig. 5 bis Fig. 16: diverse Detailausschnitte aus Fig. 2 (entsprechend jeweils einem Längs- sowie einem Querschnitt) zur Verdeutlichung der Funktionsweise der Verriegelungseinrichtung.

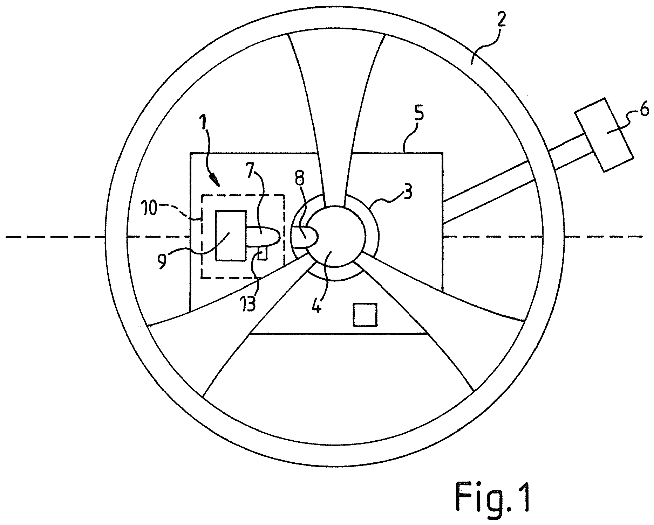

In Fig. 1 ist ein Lenkrad 2 mit einer Lenkradsäule 3 für ein Kraftfahrzeug zu sehen. In der Lenkradsäule 3 befindet sich die mit dem Lenkrad 2 in Verbindung stehende Lenkwelle 4. An der Lenkradsäule 3 ist in üblicher Weise eine Trägeranordnung 5 in der Art eines Lenkmoduls mit einem Lenkstockschalter 6 angeordnet. In der Nähe des Lenkrades 2 ist eine als elektrische Lenkungsverriegelung ausgebildete Verriegelungseinrichtung 1 an geeigneter Stelle an der Lenkradsäule 3 angeordnet, wobei die Verriegelungseinrichtung 1 schematisch sowie in teilweise aufgebrochener Darstellung gezeigt ist.

Die Verriegelungseinrichtung 1 besitzt ein zwischen zwei Positionen bewegbares, mit einer Federkraft beaufschlagtes Sperrglied 7. Das Sperrglied 7 ist entsprechend einer ersten Position in eine Einrastposition 8 an der Lenkwelle 4 in der Lenkradsäule 3 bringbar, so dass das Sperrglied 7 in blockierenden Eingriff mit der Lenkwelle 4 steht und somit das Lenkrad 2 blockiert ist und daher nicht gedreht werden kann. Das Sperrglied 7 steht in einer zweiten Position außer verriegelnden bzw. blockierenden Eingriff mit der Einrastposition 8 an der Lenkwelle 4, womit das Lenkrad 2 zur Drehung freigegeben ist. In Fig. 1 ist lediglich eine Einrastposition 8 gezeigt, es können jedoch auch mehrere Einrastpositionen 8 in der Art eines Zahnkranzes an der Lenkwelle 4 in der Lenkradsäule 3 zur Blockierung der Drehbewegung der Lenkwelle 4 vorgesehen sein, damit der verriegelnde Eingriff des Sperrglieds 7 in unterschiedlichen Stellungen des Lenkrads 2 ermöglicht ist. Die Verriegelungseinrichtung 1 besitzt weiter einen Antrieb 9 für die Bewegung des Sperrglieds 7 zwischen den beiden Positionen. Schließlich ist für die Verriegelungseinrichtung 1 noch ein Gehäuse 10 vorgesehen.

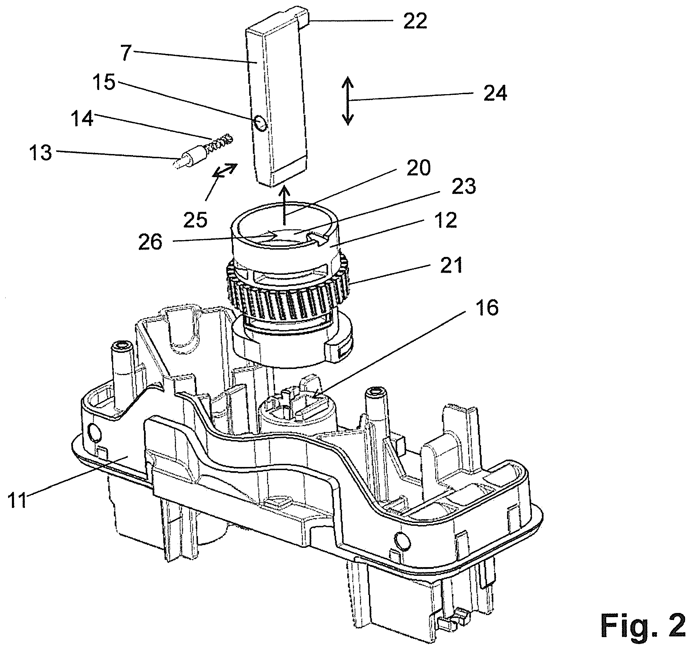

Teile der elektrischen Lenkungsverriegelung 1 sind in Explosionsdarstellung näher in Fig. 2 zu sehen. Das Gehäuse 10 umfasst einen Sockel 11 sowie einem Deckel, wobei in Fig. 2 der Deckel weggelassen ist. Der Sockel 11 besteht aus widerstandsfähigem Metall, beispielsweise aus Zinkdruckguss. Der Deckel kann ebenfalls aus Metall bestehen, gegebenenfalls ist es jedoch auch ausreichend, wenn der Deckel aus thermoplastischem Kunststoff mittels Spritzgießen hergestellt ist. Der Antrieb 9 umfasst einen nicht weiter gezeigten Elektromotor sowie ein Übertragungsglied 12 zur Bewegung des Sperrglieds 7. Vorliegend ist das Übertragungsglied 12 als ein Schneckenrad ausgestaltet. Das Schneckenrad 12 besitzt an dessen Umfang eine Verzahnung 21, mit der eine Schnecke an der Abtriebswelle des Elektromotors kämmt, so dass das Schneckenrad 12 um eine Drehachse 20 mittels des Elektromotors drehbar ist. Das Sperrglied 7 ist am Schneckenrad 12 angelenkt, und zwar greift hierzu ein Zapfen 22 am Sperrglied 7 in eine im Inneren 26 des Schneckenrades 12 befindliche Hubkurve 23 ein. Dadurch ist das im Schneckenrad 12 angeordnete Sperrglied 7 durch Drehung des Schneckenrades 12 mittels des Elektromotors in die jeweilige Drehrichtung translatorisch in Richtung der Drehachse 20 von der ersten in die zweite Position sowie von der zweiten in die erste Position, also zwischen der ersten sowie der zweiten Position gemäß dem Doppelpfeil 24, bewegbar.

Desweiteren ist ein Sicherungsmittel 13 zum Sichern des Sperrglieds 7 in der ersten Position vorgesehen, wobei das Sicherungsmittel 13 im und/oder am Sperrglied 7 angeordnet ist, wie man anhand der Fig. 2 erkennt. Das Sicherungsmittel 13 dient in der Art einer Rückdrücksicherung für das in der ersten Position befindliche Sperrglied 7, d.h. wenn das Sperrglied 7 in blockierendem Eingriff mit der Einrastposition 8 steht, zur Verhinderung von Manipulationen. Das Sicherungsmittel 13 ist relativ zum Sperrglied 7 zwischen einer Sicherungsposition und einer Entsicherungsposition bewegbar, wie nachfolgend noch näher erläutert wird. Dabei ist das Sicherungsmittel 13 derart ausgestaltet, um in der Sicherungsposition das in blockierenden Eingriff mit der Einrastposition 8 befindliche Sperrglied 7 gegen eine Bewegung in Richtung der zweiten Position zu sichern, solange das Sperrglied 7 nicht mittels des Antriebs 9 bewegt wird.

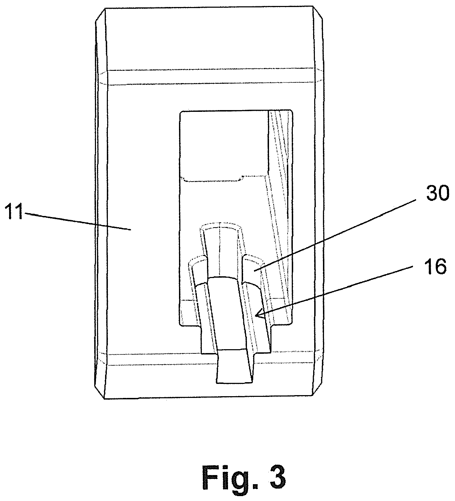

Bei dem Sicherungsmittel 13 handelt es sich um einen mit einer elastischen Kraft, die von einer Feder 14 ausgeübt wird, in Richtung zur Sicherungsposition beaufschlagten Stift mit einem im wesentlichen kreisförmigen Querschnitt. Zwecks einer hohen Widerstandsfähigkeit besteht der Stift 13 aus Metall, womit es sich bei dem Stift 13 um einen Metallstift handelt. Der Stift 13 ist wiederum in einer Aufnahme 15, und zwar vorliegend in einer Bohrung 15, im Sperrglied 7 gemäß dem Pfeil 25 translatorisch verschiebbar gelagert. Desweiteren ist ein in Fig. 3 näher dargestellter Einrastbereich 16 für das Sicherungsmittel 13 an einem gehäusefesten Teil der Verriegelungseinrichtung 1, und zwar vorliegend im massiv ausgestalteten Sockel 11 vorgesehen. Das in der Sicherungsposition befindliche Sicherungsmittel 13 greift bei in der ersten Position befindlichem und damit in blockierendem Eingriff mit der Einrastposition 8 stehenden Sperrglied 7 dessen Bewegung verriegelnd in den Einrastbereich 16 ein.

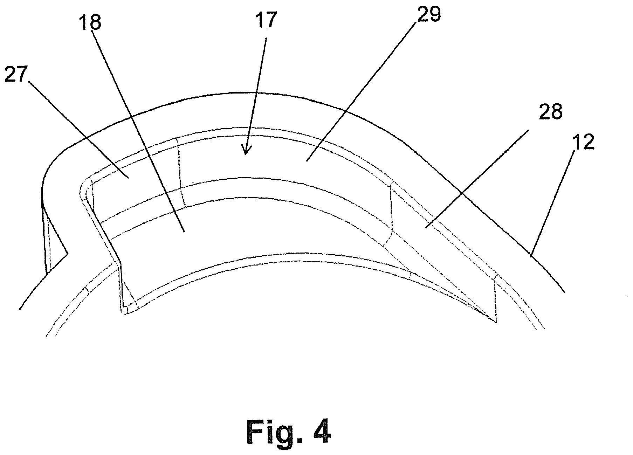

Schließlich ist noch eine in Fig. 4 dargestellte Steuerkurve 17 für das Sicherungsmittel 13 am Schneckenrad 12, und zwar im Inneren 26 des Schneckenrades 12, befindlich. Die Steuerkurve 17 wirkt für die Bewegung des Sicherungsmittels 13 zwischen der Sicherungsposition und der Entsicherungsposition mit dem Antrieb 9 zusammen. Und zwar derart, dass das Sicherungsmittel 13 bei Bewegung des Sperrglieds 7 in die erste Position von der Steuerkurve 17 in die Sicherungsposition überführbar ist sowie bei Bewegung des Sperrglieds 7 in die zweite Position von der Steuerkurve 17 in die Entsicherungsposition überführbar ist. Mit anderen Worten wird das Sicherungsmittel 13 bei Bewegung des Sperrglieds 7 in die erste Position von der Steuerkurve 17 zum Eingriff in den Einrastbereich 16 freigegeben sowie bei Bewegung des Sperrglieds 7 in die zweite Position von der Steuerkurve 17 außer Eingriff mit dem Einrastbereich 16 gebracht.

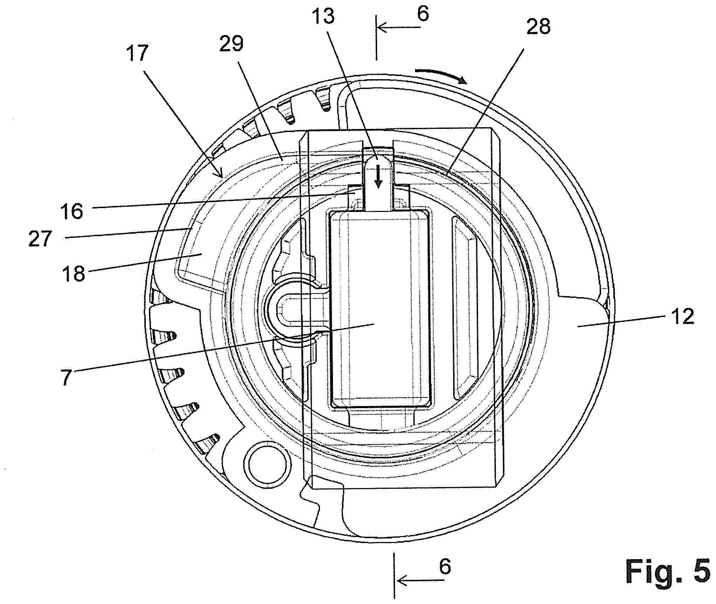

Die nähere Ausgestaltung der Steuerkurve 17 lässt sich insbesondere anhand der Fig. 5 erkennen. Die Steuerkurve 17 umfasst einen der Sicherungsposition zugeordneten ersten Abschnitt 27 sowie einen der Entsicherungsposition zugeordneten zweiten Abschnitt 28. Der zweite Abschnitt 28 ist als eine konzentrisch zur Drehachse 20 angeordnete zweite Kreisbahn bzw. kreisförmige Bahn für die Führung des Sicherungsmittels 13 ausgestaltet. Der erste Abschnitt 27 ist als eine konzentrisch zur Drehachse 20 angeordnete erste Kreisbahn bzw. kreisförmige Bahn, jedoch mit einem gegenüber der zweiten Kreisbahn 28 größeren Radius, für die Führung des Sicherungsmittels 13 ausgestaltet. Dabei verläuft eine Kurve 29 für die Führung des Sicherungsmittels 13 von der zweiten Kreisbahn 28 zur ersten Kreisbahn 27. Die Kurve 29 ist damit als Übergang zwischen der ersten Kreisbahn 27 sowie der zweiten Kreisbahn 28 angeordnet.

Zusammenfassend ist somit für den bevorzugten Aufbau der Rückdrücksicherung der Verriegelungseinrichtung 1 folgendes festzustellen:
- Die Rückdrücksicherung (RDS) besteht aus einem Metallstift 13 und einer Feder 14.
- Im Sperrglied 7 ist eine Bohrung 15 befindlich, in der sich die RDS befindet.
- Im Sockel 11 ist ein Einrastbereich 16 befindlich, in den die RDS einrasten kann, wodurch ein Zurückdrücken des Sperrglieds 7 verhindert wird.
- Im Schneckenrad 12 ist eine Steuerkurve 17 befindlich, die die RDS zum Verfahren des Sperrglieds 7 betätigt und zum Einrasten in den Sockel 11 freigibt.

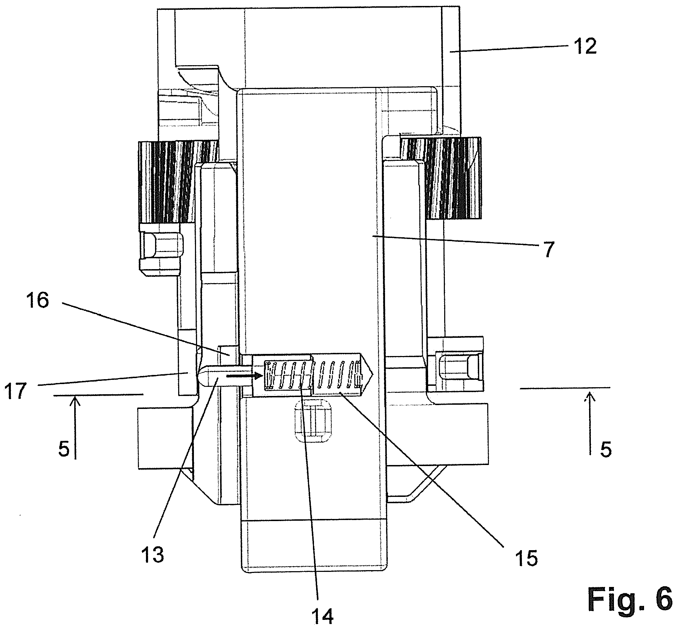

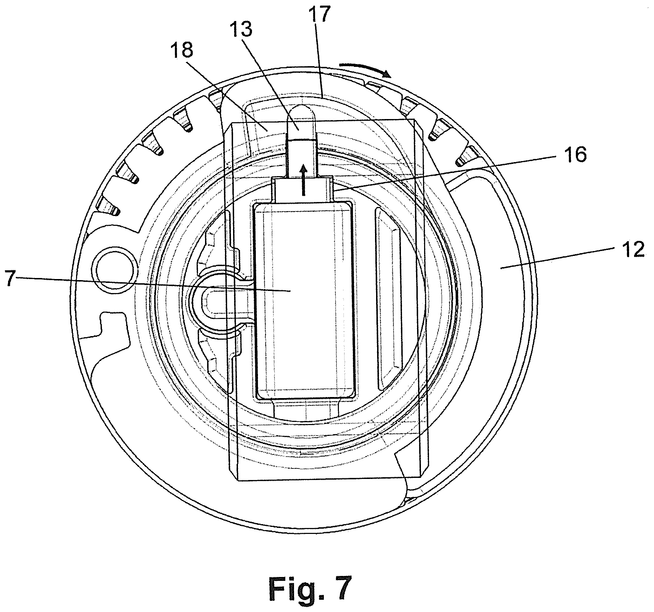

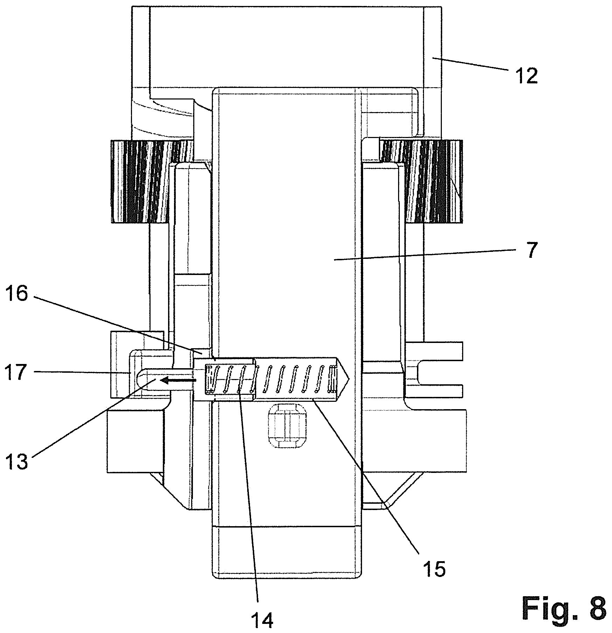

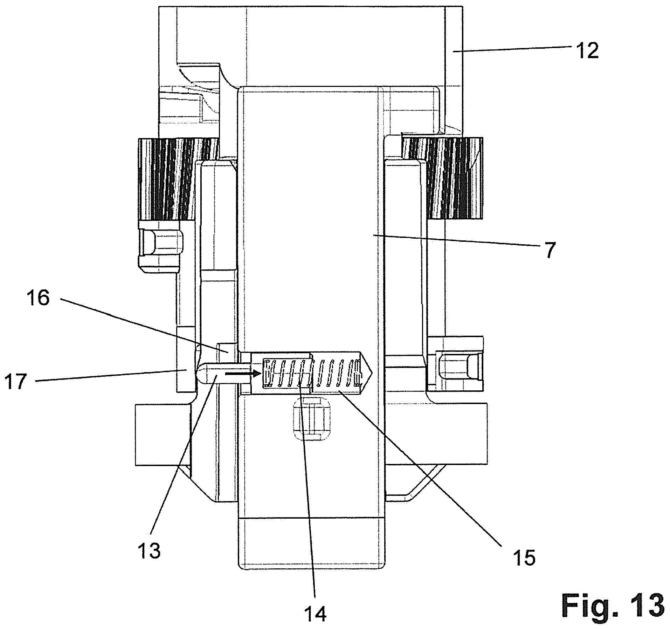

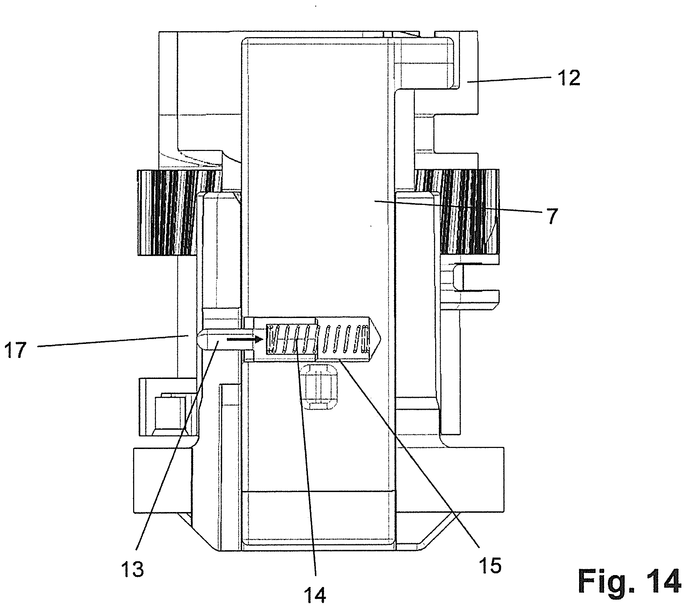

Die Funktionsweise der Verriegelungsvorrichtung 1 soll nun anhand der Figuren 5 bis 16 näher erläutert werden. Dabei zeigt die Fig. 6 einen Längsschnitt entlang der Linie 6-6 gemäß Fig. 5 im wesentlichen im Bereich des Schneckenrades 12. Die Fig. 5 zeigt einen Querschnitt im wesentlichen durch das Schneckenrad 12 im Bereich des Sicherungsmittels 13 entlang der Linie 5-5 gemäß Fig. 6. Die weiteren Figuren 7 bis 16 zeigen ebenfalls entsprechende Längs- oder Querschnitte.

Gemäß Fig. 5 und Fig. 6 ist die Funktionsweise der Rückdrücksicherung für das Verriegeln der Verriegelungseinrichtung 1 wie folgt:
- Das Sperrglied 7 fährt in die Verriegeltposition, d.h. in die erste Position, indem das Schneckenrad 12 vom Antrieb 9 im Uhrzeigersinn bewegt wird.
- Während des Verfahrens des Sperrglieds 7 wird das Sicherungsmittel 13 mittels des zweiten Abschnitts 28 der Steuerkurve 17 im Schneckenrad 12 gegen die Kraft der Feder 14 in das Sperrglied 7 gedrückt. Das Sicherungsmittel 13 wird durch den zweiten Abschnitt 28 in dieser Position in der Aufnahme 15 gehalten. Das Sicherungsmittel 13 befindet sich also in der Entsicherungsposition, und zwar so lange bis das Sperrglied 7 die Verriegeltposition erreicht hat.

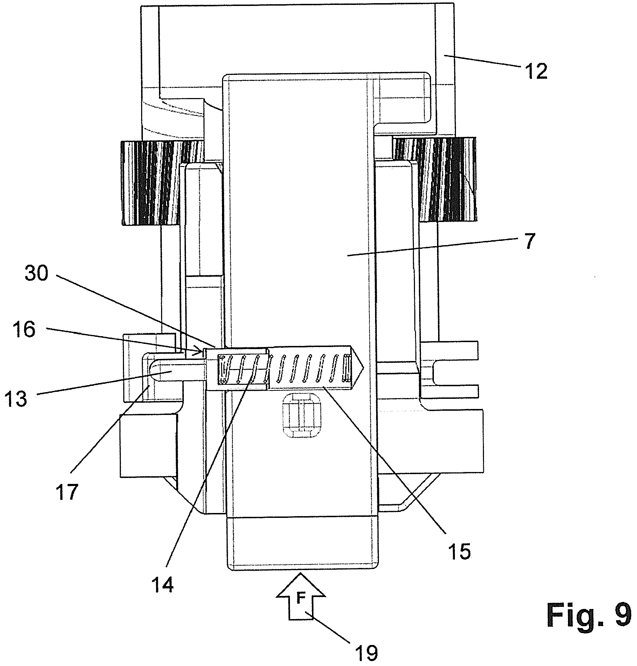

Die weitere Funktionsweise der Rückdrücksicherung beim Verriegeln der Verriegelungseinrichtung 1 ist gemäß Fig. 7, Fig. 8 und Fig. 9 wie folgt:
- Nachdem das Sperrglied 7 die Verriegeltposition erreicht hat, geht die Steuerkurve 17 über die Kurve 29 in den ersten Abschnitt 27 über. Aufgrund der unterschiedlichen Radien der beiden Abschnitte 27, 28 befindet sich ein Freiraum 18 (siehe auch Fig. 4) der Steuerkurve 17 auf Höhe des Sicherungsmittels 13.
- Das Sicherungsmittel 13 wird aufgrund des Freiraums 18 mittels der Feder 14 aus der Aufnahme 15 im Sperrglied 7 gedrückt und geht in die Sicherungsposition über. Dabei rastet das Sicherungsmittel 13 in den Einrastbereich 16 im Sockel 11 ein.
- Wie in Fig. 9 dargestellt, kann das Sperrglied 7 durch Einwirkung einer Missbrauchskraft 19 dann nicht zurückgedrückt werden, vielmehr stützt sich das Sicherungsmittel 13 im Sockel 11 ab, und zwar an einem Hinterschnitt 30 des Einrastbereichs 16 (siehe hierzu auch Fig. 3).

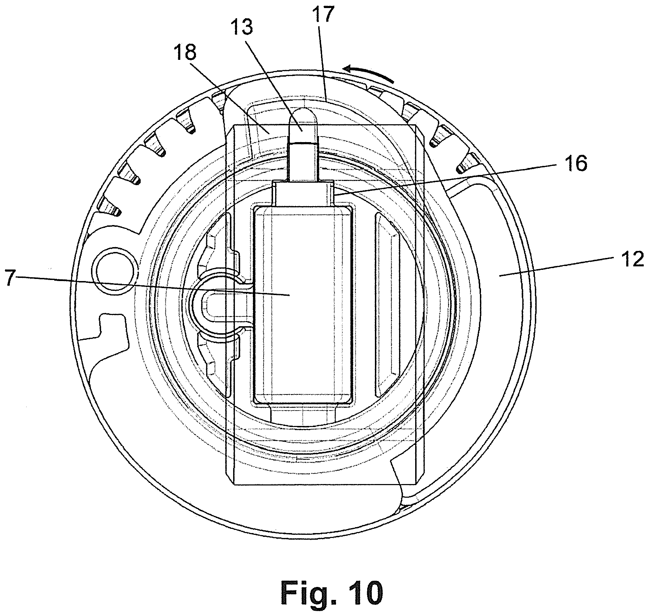

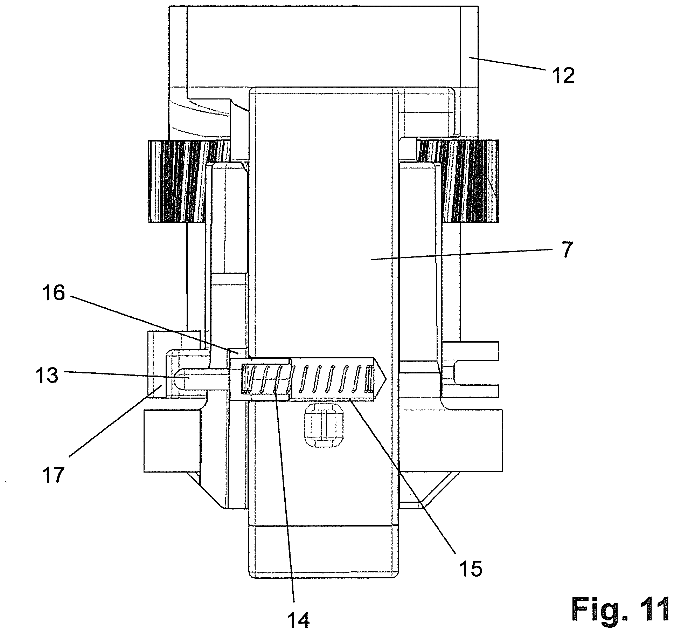

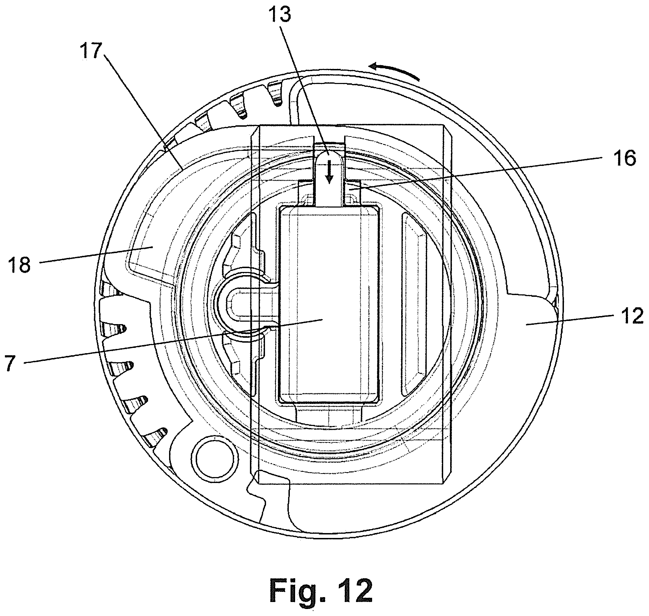

In Fig. 10 und Fig. 11 ist die Funktionsweise der Rückdrücksicherung für das Entriegeln der Verriegelungseinrichtung 1 dargestellt:
- Zum Entriegeln wird das Schneckenrad 12 vom Antrieb 9 in die entgegengesetzte Richtung, also im Gegenuhrzeigersinn, bewegt.
- Zunächst wird dabei das Sicherungsmittel 13 mittels der Steuerkurve 17 im Schneckenrad 12 in das Sperrglied 7 gedrückt, wie anhand der Figuren 12 ff. zu erkennen ist.

Die weitere Funktionsweise der Rückdrücksicherung beim Entriegeln der Verriegelungseinrichtung 1 ist gemäß Fig. 12, Fig. 13 und Fig. 14 wie folgt:
- Bevor das Sperrglied 7 in die Entriegeltposition, d.h. in die zweite Position, bewegt wird, wird das Sicherungsmittel 13 durch Übergang vom ersten Abschnitt 27 auf den zweiten Abschnitt 28 der Steuerkurve 17 im Schneckenrad 12 in die Aufnahme 15 des Sperrglieds 7 gedrückt, und damit in die Entsicherungsposition gebracht.
- Das Sperrglied 7 kann dann frei verfahren werden, da das Sicherungsmittel 13 von der zweiten Kreisbahn 28 in der Entsicherungsposition gehalten wird, und die Entriegeltposition erreichen.
- Das Sicherungsmittel 13 wird also während des Verfahrens des Sperrglieds 7 vom Schneckenrad 12 in der eingedrückten Stellung in der Bohrung 15 gehalten.

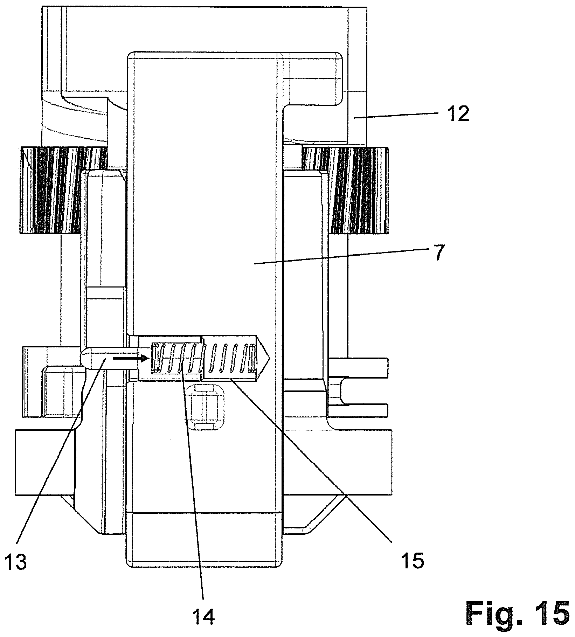

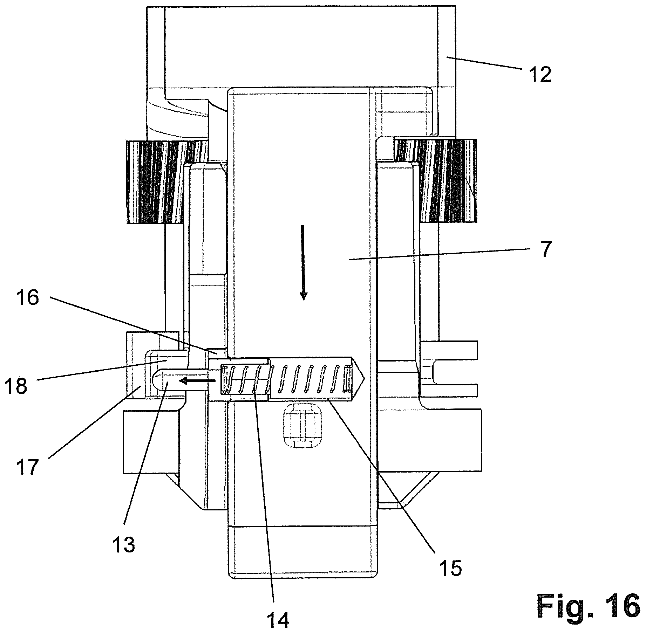

Bei entsprechender Stellung des Lenkrades 2 kann es vorkommen, dass beim Verriegeln der Verriegelungseinrichtung 1 das Sperrglied 7 nicht in blockierenden Eingriff mit der Einrastposition 8 kommen kann. Vielmehr muss dann das Lenkrad 2 für das Erreichen der Einrastposition 8 vom Benutzer des Fahrzeugs etwas bewegt werden. Insbesondere bei Verwendung eines Zahnkranzes an der Lenkwelle 4 für mehrere Einrastpositionen 8 kann es vorkommen, dass beim Vorgang des Verriegelns eine "Zahn-auf-Zahn"-Stellung eintritt. Die Funktionsweise der Rückdrücksicherung bei einer derartigen Zahn-auf-Zahn-Stellung ist in Fig. 15 und Fig. 16 näher dargestellt:
- Bei Zahn-auf-Zahnstellung wird gemäß Fig. 15 das Sicherungsmittel 13 in gedrückter Stellung in der Aufnahme 15 im Sperrglied 7, also in der Entsicherungsposition, gehalten.
- Sobald durch entsprechende Bewegung am Lenkrad 2 das Sperrglied 7 dann in die Einrastposition 8 am Zahnkranz gelangt und damit die Verriegeltposition erreicht hat, rastet das Sicherungsmittel 13 aufgrund des dann zugänglichen Freiraumes 18 in der Steuerkurve 17 gemäß Fig. 16 in den Einrastbereich 16 im Sockel 11 ein.
- Da sich damit das Sicherungsmittel 13 in der Sicherungsposition befindet, kann das Sperrglied 7 dann wie oben beschrieben nicht mehr mittels einer Missbrauchskraft 19 zurückgedrückt werden.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann eine derartige Verriegelungseinrichtung 1 nicht nur als Lenkradverriegelung an der Lenkradsäule sondern auch an einem sonstigen funktionsrelevanten Bauteil und/oder Betriebsaggregat des Kraftfahrzeugs Verwendung finden. Bei einem solchen Bauteil und/oder Betriebsaggregat kann es sich beispielsweise um den Getriebeschalthebel, um den Wählhebel für ein Automatikgetriebe, um den Anlasser o. dgl. handeln. Desweiteren kann eine solche Verriegelungseinrichtung 1 auch an einem sonstigen Schloss, beispielsweise bei einem Türschloss für das Kraftfahrzeug, für eine Immobilie o. dgl., Verwendung finden.

### Bezugszeichen-Liste:

- 1:: Verriegelungseinrichtung / elektrische Lenkungsverriegelung
- 2:: Lenkrad
- 3:: Lenkradsäule
- 4:: Lenkwelle
- 5:: Trägeranordnung
- 6:: Lenkstockschalter
- 7:: Sperrglied
- 8:: Einrastposition
- 9:: Antrieb
- 10:: Gehäuse (der Verriegelungseinrichtung)
- 11:: Sockel
- 12:: Übertragungsglied / Schneckenrad
- 13:: Sicherungsmittel / Stift / Metallstift
- 14:: Feder
- 15:: Aufnahme / Bohrung (im Sperrglied)
- 16:: Einrastbereich
- 17:: Steuerkurve
- 18:: Freiraum (in der Steuerkurve)
- 19:: Missbrauchskraft
- 20:: Drehachse
- 21:: Verzahnung
- 22:: Zapfen (am Sperrglied)
- 23:: Hubkurve (im Schneckenrad)
- 24:: Doppelpfeil (für Sperrglied)
- 25:: Pfeil (für Sicherungsmittel)
- 26:: Inneres (von Schneckenrad)
- 27:: erster Abschnitt / erste Kreisbahn (von Steuerkurve)
- 28:: zweiter Abschnitt / zweite Kreisbahn (von Steuerkurve)
- 29:: Kurve (zwischen erster und zweiter Kreisbahn)
- 30:: Hinterschnitt (von Einrastbereich)

## Patentansprüche

1. Verriegelungseinrichtung, insbesondere elektrische Lenkungsverriegelung für ein Kraftfahrzeug, mit einem zwischen einer ersten und einer zweiten Position bewegbaren Sperrglied (7) zur Verriegelung eines funktionsrelevanten Bauteils, wie der Lenkwelle (4) in der Lenkradsäule (3) oder des Getriebeschalthebels, wobei das Sperrglied (7) in der ersten Position in blockierenden Eingriff mit dem Bauteil steht und/oder in blockierenden Eingriff mit dem Bauteil bringbar ist und in der zweiten Position außer Eingriff mit dem Bauteil steht, mit einem Antrieb (9) für die Bewegung des Sperrglieds (7) zwischen den beiden Positionen, und mit einem Sicherungsmittel (13) zum Sichern des Sperrglieds (7) in der ersten Position, insbesondere in der Art einer Rückdrücksicherung für das in der ersten Position befindliche Sperrglied (7) zur Verhinderung von Manipulationen, wobei das Sicherungsmittel (13) im Sperrglied (7) angeordnet ist, **dadurch gekennzeichnet, dass** es sich bei dem Sicherungsmittel (13) um einen Stift handelt, und dass das Sicherungsmittel (13) translatorisch verschiebbar in einer Aufnahme (15) des Sperrglieds (7) gelagert ist.

2. Verriegelungseinrichtung nach Anspruch 1, **dadurch gekennzeichnet, dass** das Sicherungsmittel (13) relativ zum Sperrglied (7) zwischen einer Sicherungsposition und einer Entsicherungsposition bewegbar ist, dass vorzugsweise das Sicherungsmittel (13) derart ausgestaltet ist, um in der Sicherungsposition das in blockierenden Eingriff mit dem Bauteil befindliche Sperrglied (7) gegen eine Bewegung in Richtung der zweiten Position zu sichern, solange das Sperrglied (7) nicht mittels des Antriebs (9) bewegt wird.

3. Verriegelungseinrichtung nach Anspruch 1 oder 2, **dadurch gekennzeichnet, dass** das Sicherungsmittel (13) mit einer elastischen Kraft, insbesondere mit einer Feder (14), in Richtung zur Sicherungsposition beaufschlagt ist.

4. Verriegelungseinrichtung nach Anspruch 1, 2 oder 3, **dadurch gekennzeichnet, dass** der Stift (13) einen im wesentlichen kreisförmigen Querschnitt besitzt, dass vorzugsweise die Aufnahme (15) für den Stift (13) als eine Bohrung (15) im Sperrglied (7) ausgestaltet ist, und dass weiter vorzugsweise das Sicherungsmittel (13) aus Metall besteht.

5. Verriegelungseinrichtung nach einem der Ansprüche 1 bis 4, **dadurch gekennzeichnet, dass** ein Gehäuse (10) vorgesehen ist, und dass vorzugsweise ein Einrastbereich (16) für das Sicherungsmittel (13) an einem gehäusefesten Teil vorgesehen ist, derart dass das Sicherungsmittel (13) in der Sicherungsposition bei in blockierenden Eingriff mit dem Bauteil befindlichen Sperrglied (7) dessen Bewegung verriegelnd in den Einrastbereich (16) eingreift.

6. Verriegelungseinrichtung nach einem der Ansprüche 1 bis 5, **dadurch gekennzeichnet, dass** das Gehäuse (10) aus einem Sockel (11) sowie einem Deckel besteht, dass vorzugsweise der Sockel (11) aus Metall besteht, und dass es sich weiter vorzugsweise bei dem gehäusefesten Teil um den Sockel (11) handelt, insbesondere dass der Einrastbereich (16) im Sockel (11) befindlich ist.

7. Verriegelungseinrichtung nach einem der Ansprüche 1 bis 6, **dadurch gekennzeichnet, dass** der Antrieb (9) einen Elektromotor sowie ein Übertragungsglied (12), insbesondere ein Schneckenrad, zur Bewegung des Sperrglieds (7) umfasst, dass vorzugsweise das Übertragungsglied (12) um eine Drehachse (20) mittels des Elektromotors drehbar ist, und dass weiter vorzugsweise das Sperrglied (7) derart am Übertragungsglied (12) angelenkt ist, dass das Sperrglied (7) durch Drehung des Übertragungsglieds (12) in die jeweilige Drehrichtung translatorisch in Richtung der Drehachse (20) zwischen der ersten sowie der zweiten Position bewegbar ist.

8. Verriegelungseinrichtung nach einem der Ansprüche 1 bis 7, **dadurch gekennzeichnet, dass** eine Steuerkurve (17) für die Bewegung des Sicherungsmittels (13) zwischen der Sicherungsposition und der Entsicherungsposition mit dem Antrieb (9) zusammenwirkt, derart dass das Sicherungsmittel (13) bei Bewegung des Sperrglieds (7) in die erste Position von der Steuerkurve (17) in die Sicherungsposition überführbar ist, insbesondere zum Eingriff in den Einrastbereich (16) freigegeben wird, sowie bei Bewegung des Sperrglieds (7) in die zweite Position von der Steuerkurve (17) in die Entsicherungsposition überführbar ist, insbesondere außer Eingriff mit dem Einrastbereich (16) gebracht wird, und dass vorzugsweise die Steuerkurve (17) für das Sicherungsmittel (13) am Schneckenrad (12) befindlich ist.

9. Verriegelungseinrichtung nach einem der Ansprüche 1 bis 8, **dadurch gekennzeichnet, dass** die Steuerkurve (17) einen der Sicherungsposition zugeordneten ersten Abschnitt (27) sowie einen der Entsicherungsposition zugeordneten zweiten Abschnitt (28) umfasst, dass vorzugsweise der zweite Abschnitt (28) als eine konzentrisch zur Drehachse (20) angeordnete zweite Kreisbahn für die Führung des Sicherungsmittels (13) ausgestaltet ist, und dass weiter vorzugsweise der erste Abschnitt (27) als eine von der zweiten Kreisbahn (28) abgehende, in eine konzentrisch zur Drehachse (20) angeordnete, erste Kreisbahn (27) übergehende Kurve (29) für die Führung des Sicherungsmittels (13) ausgestaltet ist.

10. Verriegelungseinrichtung nach einem der Ansprüche 1 bis 9, **dadurch gekennzeichnet, dass** die Lenkwelle (4) in der Lenkradsäule (3) wenigstens eine Einrastposition (8), insbesondere mehrere Einrastpositionen (8) in der Art eines Zahnkranzes, für das Sperrglied (7) zur Blockierung der Drehbewegung der Lenkwelle (4) umfasst.

## Claims

1. A locking device, in particular an electric steering lock for a motor vehicle, having a locking member (7) movable between a first and a second position for locking a functionally relevant component, such as the steering shaft (4) in the steering wheel column (3) or the gear shift lever, wherein the locking member (7) in the first position is in blocking engagement with the component and/or can be brought into blocking engagement with the component and is not engaged with the component in the second position, having a drive (9) for the movement of the locking member (7) between the two positions, and having a securing means (13) for securing the locking member (7) in the first position, in particular in the manner of a push-back protection for the locking member (7) disposed in the first position for preventing tampering, wherein the securing means (13) is arranged in the locking member (7), **characterised in that** the securing means (13) is a pin, and **in that** the securing means (13) is mounted in a translationally displaceable manner in a receptacle (15) of the locking member (7).

2. The locking device according to claim 1, **characterised in that** the securing means (13) is movable relative to the locking member (7) between a securing position and a releasing position, preferably that the securing means (13) is designed to lock the locking member (7) disposed in blocking engagement with the component in the securing position against a movement in the direction of the second position as long as the locking member (7) is not moved by means of the drive (9).

3. The locking device according to claim 1 or 2, **characterised in that** the securing means (13) is acted upon with an elastic force, in particular with a spring (14), in the direction of the securing position.

4. The locking device according to claim 1, 2 or 3, **characterised in that** the pin (13) has a substantially circular cross section, that preferably the receptacle (15) for the pin (13) is designed as a borehole (15) in the locking member (7), and that further preferably the securing means (13) consists of metal.

5. The locking device according to one of claims 1 to 4, **characterised in that** a housing (10) is provided, and that preferably a latching region (16) for the securing means (13) is provided on a part fixed to the housing, such that the securing means (13) in the securing position, when the locking member (7) is in blocking engagement with the component, engages in the latching region (16) so as to lock movement of said locking member.

6. The locking device according to one of claims 1 to 5, **characterised in that** the housing (10) consists of a base (11) and a cover, that preferably the base (11) consists of metal, and that further preferably the part fixed to the housing is the base (11), in particular that the latching region (16) is disposed in the base (11).

7. The locking device according to one of claims 1 to 6, **characterised in that** the drive (9) comprises an electric motor and a transmission member (12), in particular a worm gear, for moving the locking member (7), that preferably the transmission member (12) is rotatable about an axis of rotation (20) by means of the electric motor, and further preferably that the blocking member (7) is articulated on the transmission member (12) such that the locking member (7) is moveable translationally in the direction of the axis of rotation (20) between the first and second position by rotation of the transmission element (12) in the direction of rotation.

8. The locking device according to one of claims 1 to 7, **characterised in that** a control cam (17) interacts with the drive (9) for the movement of the securing means (13) between the securing position and the releasing position such that the securing means (13) is transferable by the control cam (17) into the securing position when the locking member (7) moves into the first position, in particular is released for engagement in the latching region (16), and is transferable by the control cam (17) into the releasing position when the locking member (7) moves into the second position, in particular is disengaged from the latching region (16), and that preferably the control cam (17) for the securing means (13) is disposed on the worm gear (12).

9. The locking device according to one of claims 1 to 8, **characterised in that** the control cam (17) comprises a first section (27) associated with the securing position and a second section (28) associated with the releasing position, that preferably the second section (28) is designed as a second circular path arranged concentrically to the axis of rotation (20) for guidance of the securing means (13), and that further preferably the first section (27) is designed as a curve (29) which departs from the second circular path (28) and merges into a first circular path (27) arranged concentrically to the axis of rotation (20) for guidance of the securing means (13).

10. The locking device according to one of claims 1 to 9, **characterised in that** the steering shaft (4) in the steering wheel column (3) comprises at least one latching position (8), in particular a plurality of latching positions (8) in the manner of a sprocket, for the locking member (7) for blocking the rotational movement of the steering shaft (4).

## Revendications

1. Dispositif de verrouillage, en particulier verrou électrique de direction pour véhicule automobile, comprenant un élément d'arrêt (7) mobile entre une première et une seconde position pour verrouiller un composant fonctionnel, tel que l'arbre de direction (4) dans la colonne de direction (3) ou le levier de changement de vitesses, l'élément d'arrêt (7) se trouvant dans la première position en contact à effet bloquante avec le composant et/ou pouvant être amené en contact par blocage avec le composant et dans la seconde position, ne se trouvant pas en contact avec le composant, un dispositif d'entraînement (9) pour le déplacement de l'élément d'arrêt (7) entre les deux positions, et un moyen de fixation (13) pour fixer l'élément d'arrêt (7) dans la première position, en particulier à la manière d'une sécurisation de pression pour l'élément d'arrêt (7) se trouvant dans la première position afin d'empêcher les manipulations, le moyen de fixation (13) étant agencé dans l'élément d'arrêt (7), **caractérisé en ce que** le moyen de fixation (13) est une tige et **en ce que** le moyen de fixation (13) est monté coulissant en translation dans un logement (15) de l'élément d'arrêt (7).

2. Dispositif de verrouillage selon la revendication 1, **caractérisé en ce que** le moyen de fixation (13) est mobile par rapport à l'élément d'arrêt (7) entre une position de fixation et une position de libération, de préférence le moyen de fixation (13) est adapté pour que, en position de fixation, l'élément d'arrêt (7) se trouvant en contact à effet bloquant avec le composant empêche le mouvement dans la direction de la seconde position, tant que l'élément d'arrêt (7) n'est pas déplacé au moyen de l'entraînement (9).

3. Dispositif de verrouillage selon la revendication 1 ou 2, **caractérisé en ce que** le moyen de fixation (13) est soumis à une force élastique, en particulier au moyen d'un ressort (14), dans le sens de la position de fixation.

4. Dispositif de verrouillage selon la revendication 1, 2 ou 3, **caractérisé en ce que** la tige (13) a une section transversale sensiblement circulaire, **en ce que** de préférence, le logement (15) de la tige (13) est un alésage (15) dans l'élément d'arrêt (7), et **en ce que**, plus préférablement encore, le moyen de fixation (13) est constitué de métal.

5. Dispositif de verrouillage selon l'une des revendications 1 à 4, **caractérisé en ce que** le dispositif comporte un boîtier (10) et **en ce que** de préférence, une zone d'enclenchement (16) pour le moyen de fixation (13) est ménagée sur une partie fixe du boîtier, de sorte que le moyen de fixation (13) dans la position de verrouillage vienne s'engager dans la zone d'encliquetage (16) lorsque l'élément d'arrêt (7) se trouve en contact à effet bloquant avec le composant, en verrouillant son mouvement.

6. Dispositif de verrouillage selon l'une des revendications 1 à 5, **caractérisé en ce que** le boîtier (10) est constitué d'un fond (11) et d'un couvercle, **en ce que** de préférence le fond (11) est en métal, et **en ce que**, de préférence, la partie fixe du boitier est le fond (11), en particulier que la zone d'encliquetage (16) est située dans le fond (11).

7. Dispositif de verrouillage selon l'une des revendications 1 à 6, **caractérisé en ce que** le dispositif d'entraînement (9) comprend un moteur électrique ainsi qu'un élément de transmission (12), en particulier une roue à vis sans fin, pour déplacer l'élément d'arrêt (7), **en ce que**, de préférence l'élément de transmission (12) tourne autour d'un axe de rotation (20) au moyen du moteur électrique, et **en ce que**, de préférence encore, l'élément d'arrêt (7) est articulé sur l'élément de transmission (12) de sorte que l'élément d'arrêt (7) puisse se déplacer en translation dans la direction de l'axe de rotation (20) entre la première et la seconde position lorsque l'élément de transmission (12) tourne dans le sens de rotation respectif.

8. Dispositif de verrouillage selon l'une des revendications 1 à 7, **caractérisé en ce qu'**une came de commande (17) pour le déplacement du moyen de fixation (13) entre la position de fixation et la position de libération coopère avec le dispositif d'entraînement (9), de telle sorte que le moyen de fixation (13) soit amené dans la position de fixation par la came de commande (17) lors du déplacement de l'élément d'arrêt (7) dans la première position, en particulier soit libéré pour s'encliqueter dans la zone d'encliquetage (16), et soit amené dans la position de libération par la came de commande (17) lors du déplacement de l'élément d'arrêt (7) dans la seconde position, en particulier soit délogé de la zone d'encliquetage (16), et **en ce que**, de préférence, la came de commande (17) pour le moyen de fixation (13) se trouve sur la roue à vis sans fin (12).

9. Dispositif de verrouillage selon l'une des revendications 1 à 8, **caractérisé en ce que** la came de commande (17) comprend un premier segment (27) associé à la position de fixation et un second segment (28) associé à la position de libération, **en ce que** de préférence le second segment (28) est conçu sous la forme d'une bande circulaire disposée de manière concentrique à l'axe de rotation (20) pour le guidage du moyen de fixation (13), et **en ce que** de préférence, le premier segment (27) est une courbe (29) devenant une première bande circulaire (27) sortant de la seconde bande circulaire (28) de manière concentrique à l'axe de rotation (20), pour le guidage du moyen de fixation (13).

10. Dispositif de verrouillage selon l'une des revendications 1 à 9, **caractérisé en ce que** l'arbre de direction (4) dans la colonne de direction (3) présente au moins une position d'encliquetage (8), en particulier plusieurs positions d'encliquetage (8) à la manière d'une couronne dentée pour l'élément d'arrêt (7) afin de bloquer le mouvement de rotation de l'arbre de direction (4).
